# FASCICULE DE BREVET EUROPEEN

(11) **EP 0 314 101 B1**
(45) Date de publication et mention de la délivrance du brevet: **29.09.1993**
(21) Numéro de dépôt: 88117839.6
(22) Date de dépôt: 26.10.1988
(51) Int. Cl.: H04B 10/00

(54) **Système de transmission radiofréquence-optique, notamment dans le domaine des télécommunications spatiales**
Radiofrequenzoptisches Übertragungssystem, besonders für Satellitenfunken
Radiofrequency-optical transmission system, especially in the field of satellite communications

(30) Priorité: 29.10.1987 FR 8714994
(43) Date de publication de la demande: 03.05.1989
(73) Titulaire: ALCATEL ESPACE, F-92407 Courbevoie Cédex (FR)
(72) Inventeur: Franchini, Elisabeth, F-31520 Ramonville Saint Ague (FR)
(74) Mandataire: Weinmiller, Jürgen

(56) Documents cités:
- FR-A- 2 152 679
- GB-A- 1 218 421
- GLOBECOM'85 IEEE GLOBAL TELECOMMUNICATIONS CONFERENCE, Nouvelle Orléans, Louisiana, 2-5 décembre 1985, vol. 3, pages 1181-1184, IEEE, New York, US; C.-S. YEN et al.: "The use of directed optical beams in wireless computer communications"
- IEEE INTERNATIONAL CONFERENCE ON COMMUNICATIONS: INTEGRATING COMMUNICATION FOR WORLD PROGRESS, Boston, Massachusetts, 19-22 juin 1983, vol. 3, pages 1201-1207, IEEE, New York, US; V.W.S. CHAN et al.: "Heterodyne lasercom systems using GaAs lasers for ISL applications"

## Description

L'invention concerne un système de transmission radiofréquence-optique, notamment dans le domaine des télécommunications spatiales.

Un document intitulé "Assessment of optical communications systems for data relay satellite" de JL. PERBOS et B. Laurent publié dans IAF 86 concerne la possibilité d'utiliser les technologies optiques pour assurer les liaisons de communication à haut débit de données (HDR) du futur système satellite de transmission de données européen. Deux technologies optiques particulières envisagées, basées sur l'utilisaton de lasers CO₂ opérant à 10.6 µm ou de diodes lasers semi-conducteurs opérant dans la bande 0,8 à 1,3 µm pour réaliser des communications intersatellites, sont envisagées dans ce document. Dans le cadre de liaisons optiques intersatellites, un tel document décrit l'utilisation d'une modulation directe de lasers semiconducteurs, ce qui suppose de démoduler le signal hyperfréquence montant à bord du premier satellite pour établir une liason directe optique entre les deux satellites, puis une remodulation de l'information regénérée à bord du deuxième satellite pour une retransmission en hyperfréquence vers le sol. On connait aussi du document IEEE INTERNATIONAL CONFERENCE ON COMMUNICATIONS, INTEGRATING COMMUNICATION FOR WORLD PROGRESS (Boston, Na 19-22 Juin 1983, vol. 3, pages 1201-1207: "Heterodyne lasercom systems using Ga As lasers for ISL applications"), un systeme de transmission radiofréquence-optique comprenant une interface radiofréquence-optique transmettant une onde optique moduleé en longueur d'onde à partir d'une démodulation d'un signal reçu radiofréquence et une interface optique radiofrequence transmettant un signal radiofréquence à partir de la remodulation de l'onde optique seine.

Dans le cas d'une liaison radiofréquence (par example hyperfréquence-optique) on ne sait donc pas réémettre sans passer en bande de base c'est-à-dire sans démodulation et régénération.

Le but de l'invention est de pallier cet inconvénient en réalisant des transitions hyperfréquence-optique les plus simples possible.

L'invention propose, à cet effet, un système de transmission radiofréquence-optique dont les caractéristiques sont définies dans les revendications.

L'invention permet, donc, de supprimer, dans le cadre de liaisons optiques, par exemple intersatellites, ou plus généralement de liaisons successives en hyperfréquence puis en optique, des démodulations, régénérations et remodulation intermédiaires de l'information.

Selon l'invention, des liaisons successives en hyperfréquence et en optique peuvent donc être mise en oeuvre sans démodulation, ni régénération et remodulation du signal. Dans le cadre de liaisons optiques intersatellites, l'invention permet de diminuer le nombre d'équipements embarqués à bord des satellites et, dans certains cas, autorise des modifications, si besoin est, de la nature du signal transmis (modulation de la liaison montante hyperfréquence par exemple).

Les caractéristiques et avantages de l'invention ressortiront d'ailleurs de la description qui va suivre, à titre d'exemple non limitatif, en référence aux figures annexées sur lesquelles :
- la figure 1 représente schématiquement le système selon l'invention :
- la figure 2 représente l'interface hyperfréquence-optique ;
- la figure 3 représente l'interface optique-hyperfréquence.

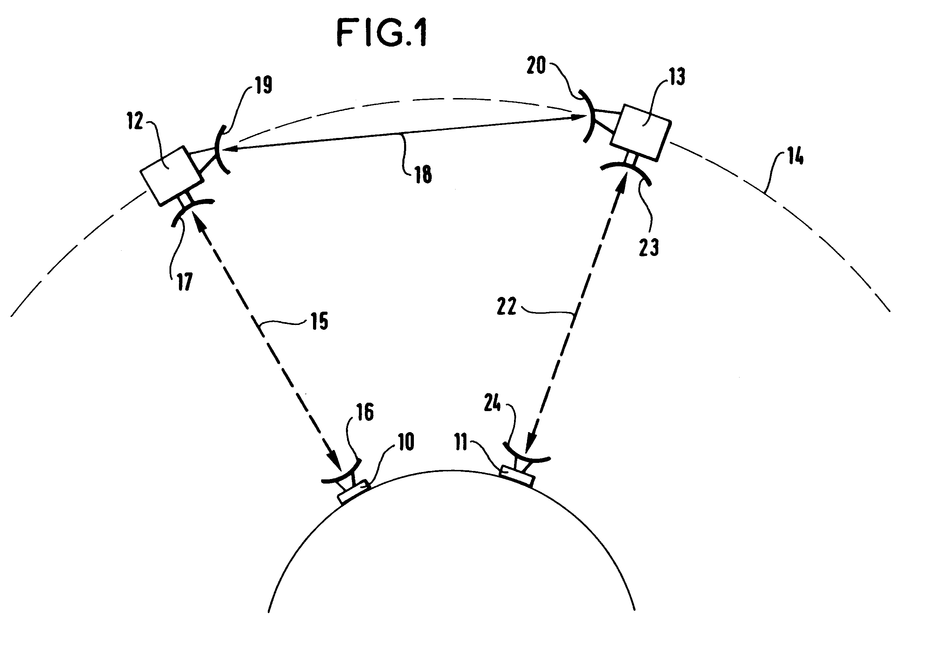

Dans un exemple de réalisation représenté à la figure 1, le système de l'invention comprend :
- une première et une seconde stations sol 10 et 11 ;
- un premier et un second satellites 12 et 13 positionnés sur une orbite géostationnaire 14.

Le premier satellite 12 contient un premier dispositif interface entre une première onde radiofréquence 15, par exemple hyperfréquence, modulée, transmise entre les antennes hyperfréquences 16 et 17 respectivement de la première station sol 10 et dudit premier satellite 12, et une onde optique 18 transmise entre deux systèmes émetteur-récepteur 19 et 20 portés respectivement par le premier et le deuxième satellites 12 et 13.

Le second satellite 13 contient un second dispositif interface entre cette onde optique 18 et une seconde onde radiofréquence 22, par exemple hyperfréquence, modulée, transmise entre les antennes hyperfréquences 23 et 24 respectivement portées par le second satellite 13 et par la seconde station sol 11.

Comme représenté sur la figure 1, les liaisons 15, 18 et 22 sont bidirectionnelles, aussi chacun des deux dispositifs interfaces comprend :
- une interface hyperfréquence-optique,
- une interface optique-hyperfréquence.

Dans le système de l'invention, la transmission optique 18 est soumise à une modulation. Plusieurs modulations peuvent être envisagées pour une transmission optique : une modulation directe de l'intensité de la lumière par "tout ou rien" (ce qui correspond à une transmission en bande de base), une modulation de la lumière, en amplitude, en longueur d'onde ou en phase. Selon l'invention la modulation se fait en longueur d'onde.

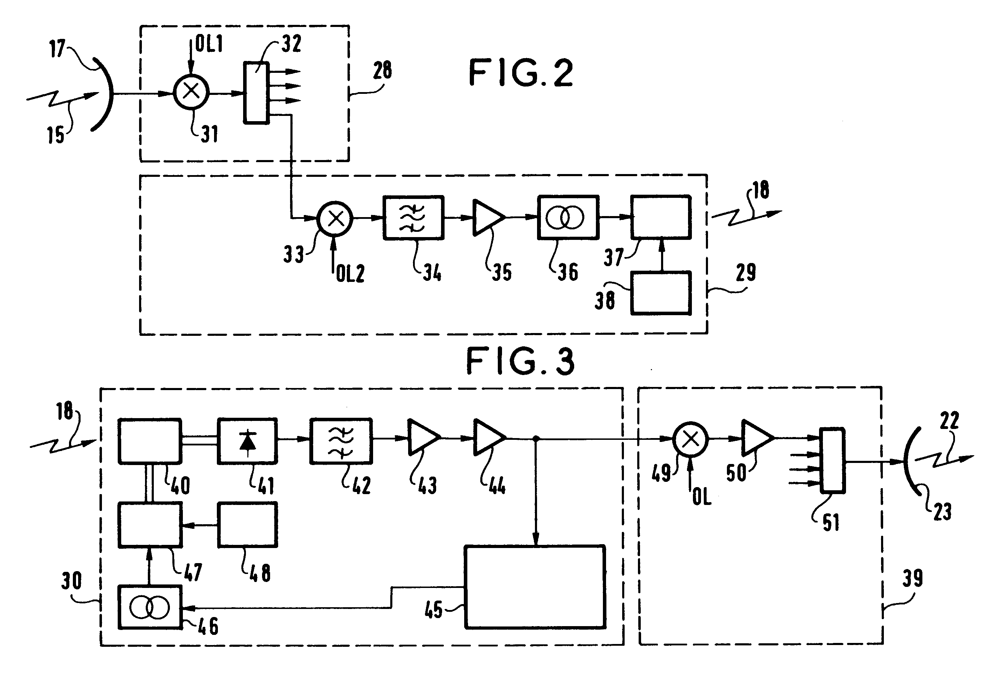

L'interface hyperfréquence-optique, comme représentée à la figure 2, comprend :
- un circuit de réception hyperfréquence 28;
- un circuit d'émisssion optique 29.

Le circuit de réception hyperfréquence 28, relié à une antenne hyperfréquence, par exemple l'antenne 17, comprend notamment un mélangeur 31 recevant un signal oscillateur OL1 et un démultiplexeur 32 pour sélectionner par exemple un canal particulier.

Le circuit d'émission optique 29 comprend un mélangeur 33 recevant un signal oscillateur OL2 suivi d'un filtre 34, d'un amplificateur 35, d'un circuit de commande en courant 36 et d'un laser 37 auquel est connecté un circuit de contrôle thermique 38.

Le circuit hyperfréquence 28 est un circuit classique pour l'homme de l'art.

Le circuit d'émission optique 29 permet de réaliser une translation de fréquence de ce signal hyperfréquence pour le rendre compatible avec la bande passante du circuit d'émisssion optique. Il permet ensuite de réaliser le filtrage (34) de ce signal puis la modulation du courant d'injection de laser 37 par ce signal.

La modulation en fréquence (ou en longueur d'onde) du laser émetteur est crée par la modulation de son courant d'injection.

Le laser doit être stabilisé en température (38) en raison de la sensibilité de sa longueur d'onde d'émission à ce paramètre et la largeur de la raie d'émission doit être réduite jusqu'à une valeur compatible avec le rythme de transmission et la qualité de transmission requise.

Dans un exemple de réalisation l'antenne, qui est, par exemple, l'antenne 17 de la figure 1, reçoit, par exemple, une onde hyperfréquence 15 de 30 GHz. En sortie du mélangeur on a un signal de 800 MHz. Le laser est, par exemple, un laser semi-conducteur émettant une onde telle que λ = 1,3 µ m (λ : longueur d'onde centrale), cette longueur d'onde λ étant modulée.

L'interface optique-hyperfréquence, comme représentée à la figure 3, comprend :
- un circuit de réception optique 30 ;
- un circuit d'émission hyperfréquence 39.

Le circuit de réception optique comprend un circuit d'adaptation optique 40 suivi d'une diode de détection 41, d'un filtre 42, d'un préamplificateur 43, d'un amplificateur 44.

Une boucle d'acquisition et de poursuite de fréquence 45, couplée à la sortie de cet amplificateur 44, étant suivie d'un circuit de commande en courant 46 permet de commander en fréquence un laser 47, régulé en température par le circuit de contrôle thermique 48. Ce laser 47 est relié à la seconde entrée du circuit d'adaptation optique 40.

Le circuit d'émission hyperfréquence, classique pour l'homme de l'art, comprend un mélangeur 49, qui reçoit un signal oscillateur OL, suivi d'un amplificateur 50, d'un multiplexeur 51 relié à une antenne hyperfréquence, par exemple l'antenne 23.

Ce circuit de réception optique est donc constitué d'un laser 47 oscillateur local, régulé en température (48) et dont la largeur de raie d'émission est compatible avec les performances requises, d'un circuit d'adaptation 40 pour réaliser d'une part le mélange du signal optique reçu et du signal issu du laser 47 d'autre part le rattrapage éventuel de polarisation de l'onde optique, d'une diode de réception 41, d'amplificateurs 43 et 44, et d'un système d'acquisition et de poursuite de fréquence 45. L'onde optique incidente et l'onde optique issue du laser oscillateur local sont détectées par la diode 41 qui fournit, par une détection quadratique en champ, un signal électrique à la fréquence différence des fréquences des deux ondes optiques, er reproduisant le spectre de l'information (translaté). La fréquence intermédiaire est stabilisée par le système de poursuite de fréquence 45, la bande passante de ce système et sa complexité dépendant des conditions extérieures (doppler par exemple) et de l'indice de modulation à l'émission. Ce système est basé sur l'exploitation de l'énergie en sortie de filtres 42 placés autour de la fréquence intermédiaire théorique.

Un choix judicieux de la fréquence intermédiaire permet, après une éventuelle deuxième translation de fréquence et sous réserve de compatibilité de largeur de bande de fréquence utilisée, d'insérer le signal, à l'aide du circuit d'émission hyperfréquence 39, dans un des canaux de la liaison hyperfréquence (qui suit la liaison optique).

Dans un exemple de réalisation ce signal reçu par le circuit d'adaptation optique est un signal de longueur d'onde centrale λ = 1,3 µm.

En entrée du mélangeur on a, par exemple, un signal d'une fréquence de 2 GHz et en sortie du même mélangeur 49 ainsi qu'en sortie d'antenne 52 un signal de 20 GHz.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

Ainsi le système de l'invention peut correspondre à la combinaison : Faisceaux Hertziens - câble optique sous-marin-faisceaux hertziens.

## Revendications

1. Un système de transmission radiofréquence-optique, notamment dans le domaine des télécommunications spatiales, comprenant un premier dispositif interface entre une première onde radiofréquence modulée (15) et une onde optique (18) modulée en longueur d'onde et un second dispositif interface entre ladite onde optique (18) et une seconde onde radiofréquence modulée (22), caractérisé en ce que:
- le premier dispositif interface comprend un circuit de réception radiofréquence (28), et un circuit d'émission optique (29) ayant une première bande passante et agencé pour réaliser une translation de fréquence de la première onde radiofréquence pour la rendre compatible avec ladite bande passante;
- le second dispositif interface comprend un circuit d'émission radiofréquence (39) ayant une seconde bande passante, et un circuit de réception optique (30) agencé pour réaliser une translation de fréquence de l'onde optique pour la rendre compatible avec ladite seconde bande passante.

2. Le système selon la revendication 1, dans lequel les ondes radiofréquences (15,22) sont des ondes hyperfréquences.

3. Le système selon l'une des revendications 1 ou 2, dans lequel le premier dispositif interface est embarqué sur un premier satellite (12) et le second dispositif interface est embarqué sur un second satellite (13).

4. Le système selon la revendication 3, dans lequel un autre premier dispositif interface est embarqué sur le second satellite (13) et un autre second dispositif interface est embarqué sur le premier satellite (12).

5. Le système selon la revendication 3, dans lequel la première onde radiofréquence (15) est une onde hyperfréquence émise par une première station sol (10) et reçue par le premier satellite (12), et la deuxième onde radiofréquence (22) est une onde hyperfréquence émise par le second satellite (13) et reçue par une seconde station sol (11).

6. Le système selon l'une quelconque des revendications précédentes, dans lequel le circuit d'émission optique (29) comporte successivement un mélangeur (33) recevant un signal oscillateur (OL2), un filtre (34), un amplificateur (35) un circuit de commande en courant (36) et un laser (37) auquel est connecté un circuit de contrôle thermique (38).

7. Le système selon l'une quelconque des revendications précédentes, dans lequel le circuit de réception optique comporte un circuit d'adaptation optique (40) suivi d'une diode de détection (41), d'un filtre (42), d'au moins un amplificateur (43, 44), une boucle d'acquisition et de poursuite de fréquence (45), couplée à la sortie de ce (ou ces) amplificateur (s), étant suivie d'un circuit de commande en courant (46) permettant de commander un laser (47) piloté par un circuit de contrôle thermique (48), ce laser étant relié à une seconde entrée du circuit d'adaptation optique (40).

## Claims

1. A radio-optical transmission system, in particular for space telecommunications, comprising a radio-optical first interface device between a first modulated radio wave (15) and a light wave (18), subjected to wavelength modulation, and an optical radio second interface device between said light wave (18) and a second modulated radio wave (22), characterized in that
- the first interface device includes a radio frequency reception circuit (28) and an optical transmission circuit (29) having a first passband and conceived to perform a frequency translation of the first radio wave in order to render it compatible with said passband;
- the second interface device includes a radio frequency transmission circuit (39) having a second passband and an optical reception circuit (30) conceived to perform a frequency translation of the optical wave in order to render it compatible with said second passband.

2. A system according to claim 1, wherein the radio waves (15, 22) are microwaves.

3. A system according to claim 1 or 2, wherein the first interface device is on board a first satellite (12), and in that the second interface device is on board a second satellite (13).

4. A system according to claim 3, wherein another first interface device is on board of the second satellite (13), and another second interface device is on board of the first satellite (12).

5. A system according to claim 3, wherein the first radio wave (15) is a microwave transmitted by a first ground station (10) and received by the first satellite (12), and the second radio wave (22) is a microwave transmitted by the second satellite (13) and received by a second ground station (11).

6. A system according to any preceding claim, wherein the optical transmitter circuit (29) comprises in succession: a mixer (33) receiving an oscillator signal (OL2); a filter (34); an amplifier (35); a current controlling circuit (36); and a laser (37) which is connected to a temperature control circuit (38).

7. A system according to any preceding claim, wherein the optical receiver circuit comprises: an optical matching circuit (40) followed by a detector diode (41); a filter (42); at least one amplifier (43, 44); a frequency acquisition and tracking loop (45) coupled to the outlet from said amplifier(s); and a current controlling circuit (46) for controlling a laser (47) controlled by a temperature control circuit (48); said laser being connected to a second input of the optical matching circuit (40).

## Patentansprüche

1. System zur funkfrequenztechnisch-optischen Übertragung, insbesondere im Bereich der Satellitennachrichtentechnik, mit einer ersten Schnittstellenvorrichtung zwischen einer ersten modulierten Funkfrequenzwelle (15) und einer wellenlängenmodulierten optischen Welle (18) und mit einer zweiten Schnittstellenvorrichtung zwischen der optischen Welle (18) und einer zweiten modulierte Funkfrequenzwelle (22), dadurch gekennzeichnet, daß
- die erste Schnittstellenvorrichtung einen Funkfrequenzempfangskreis (28) und einen optischen Sendekreis (29) enthält, der ein erstes Durchlaßband besitzt und eine Frequenzumsetzung der ersten Funkfrequenzwelle durchführen kann, um sie mit diesem Durchlaßband kompatibel zu machen,
- eine zweite Schnittstellenvorrichtung, einen Funkfrequenzsendekreis (39) mit einem zweiten Durchlaßband und einen optischen Empfangskreis (30) aufweist, der eine Frequenzumsetzung der optischen Welle durchführen kann, um sie mit dem zweiten Durchlaßband kompatibel zu machen.

2. System nach Anspruch 1, in dem die Funkfrequenzwellen (15, 22) Mikrowellen sind.

3. System nach einem der Ansprüche 1 oder 2, in dem die erste Schnittstellenvorrichtung auf einem ersten Satelliten (12) und die zweite Schnittstellenvorrichtung auf einem zweiten Satelliten (13) montiert ist.

4. System nach Anspruch 3, in dem eine weitere erste Schnittstellenvorrichtung auf dem zweiten Satelliten (13) und eine weitere zweite Schnittstellenvorrichtung auf dem ersten Satelliten (12) montiert sind.

5. System nach Anspruch 3, in dem die erste Funkfrequenzwelle (15) eine Mikrowelle ist, die von einer ersten Bodenstation (10) ausgesendet und vom ersten Satelliten (12) empfangen wird, und in dem die zweite Funkfrequenzwelle (22) eine Mikrowelle ist, die vom zweiten Satelliten (13) ausgesendet und von einer zweiten Bodenstation (11) empfangen wird.

6. System nach einem beliebigen der vorhergehenden Ansprüche, in dem der optische Sendekreis (29) nacheinander einen Mischer (33), der ein Oszillatorsignal (OL2) empfängt, ein Filter (34), einen Verstärker (35), einen Stromsteuerkreis (36) sowie einen Laser (37) enthält, mit dem ein thermischer Regelkreis (38) verbunden ist.

7. System nach einem beliebigen der vorhergehenden Ansprüche, in dem der optische Empfangskreis einen optischen Anpassungskreis (40) gefolgt von einer Detektordiode (41), einem Filter (42), mindestens einem Verstärker (43, 44), einer Schleife (45) zur Erfassung und Verfolgung der Frequenz, die an den Ausgang dieses Verstärkers bzw. dieser Verstärker gekoppelt ist und von einem Stromsteuerkreis (46) gefolgt wird, der die Steuerung eines von einem thermischen Regelkreis (48) stabilisierten Lasers (47) erlaubt, der an einen zweiten Eingang des optischen Anpassungskreises (40) angeschlossen ist.
